# EUROPEAN PATENT SPECIFICATION

(11) **EP 3 674 894 B1**
(45) Date of publication and mention of the grant of the patent: **30.10.2024**
(21) Application number: 17928117.5
(22) Date of filing: 13.10.2017
(51) Int. Cl.: G06F 9/50, G06F 9/54

(54) **PROCESSING METHOD AND DEVICE**
VERARBEITUNGSVERFAHREN UND -VORRICHTUNG
PROCÉDÉ ET DISPOSITIF DE TRAITEMENT

(30) Priority: 09.10.2017 CN 201710931292
(43) Date of publication of application: 01.07.2020
(73) Proprietor: Huawei Technologies Co., Ltd., Longgang District Shenzhen, Guangdong 518129 (CN)
(72) Inventor: LIN, Zhenchao, Shenzhen Guangdong 518129 (CN); DING, Chao, Shenzhen Guangdong 518129 (CN); LIU, Lei, Shenzhen Guangdong 518129 (CN); XU, Shun, Shenzhen Guangdong 518129 (CN); LIU, Bo, Shenzhen Guangdong 518129 (CN); DENG, Meng, Shenzhen Guangdong 518129 (CN); LU, Shoudong, Shenzhen Guangdong 518129 (CN); ZHAO, Wei, Shenzhen Guangdong 518129 (CN); LU, Jianhai, Shenzhen Guangdong 518129 (CN)
(74) Representative: Gill Jennings & Every LLP
(86) International application number: PCT/CN2017/106193
(87) International publication number: WO 2019/071616

(56) References cited:
- CN-A- 103 279 331
- CN-A- 103 455 355
- CN-A- 106 557 369
- JP-A- 2017 010 473
- US-A1- 2004 194 093
- US-B1- 6 182 109
- THORSTEN SCHREIBER: "Android Binder Android Interprocess Communication", SEMINARTHESIS OF UNI. BOCHUM (RUB) - CHIAR NETWORK AND DATA SECURITY, 5 October 2011 (2011-10-05), pages 1 - 34, XP055099704, Retrieved from the Internet <URL:http://www.nds.rub.de/media/attachments/files/2012/03/binder.pdf> [retrieved on 20140131]

## Description

### TECHNICAL FIELD

Embodiments of the present application relate to the terminal field, and in particular, to a processing method and an apparatus.

### BACKGROUND

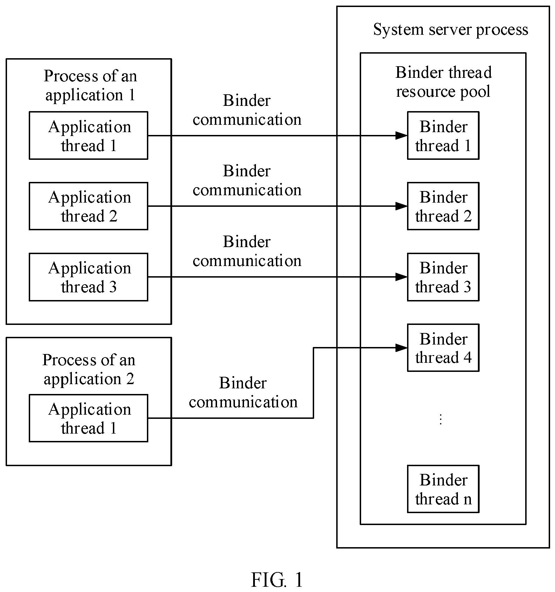

Binder is one of inter-process communication (Inter-Process Communication, IPC) manners in an Android (Android) system. For example, a framework layer (Framework layer) and an application layer (Application Layer) in the Android system communicate in the Binder manner. FIG. 1 is a schematic diagram of Binder communication according to an embodiment of the present application. The Binder communication is performed between an application process and a system server process. A process of an application 1 starts three application threads. A process of an application 2 starts one application thread. The Binder communication is performed between one application thread and one Binder thread in the system server process.

Usually, the Binder is applicable only to lightweight inter-process communication, and a process includes at most 16 Binder threads by default. Therefore, the Binder communication is completed in a short time. However, some application processes may start a large quantity of application threads in a short time to communicate with Binder threads in the system server process. The Binder threads are limited as resources of the Binder communication manner. For example, a system server (System Server) process in the framework layer includes at most 32 Binder threads. Therefore, if the application process starts overmuch application threads, all the Binder threads in the system server process are occupied. This affects a normal communication service in the Android system, causes the Android system to get stuck, and even causes a virtual machine of the entire Android system to crash and restart.

Thorsten Schreiber: "Android Binder Android Interprocess Communication", Seminarthesis of Uni. Bochum (RUB) - Chiar Network and Data Security, 5 October 2011 (2011-1 0-05), pages 1-34, XP055099704, Retrieved from the Internet: URL:http://www.nds.rub.de/media/attachments/files/2012/03/binder. pdf discusses android binder android inter-process communication.

### SUMMARY

Embodiments of the present application provide a processing method and an apparatus, to resolve a problem that a normal communication service of an Android system is affected due to Binder thread exhaustion.

The invention has been defined in the independent claims. Further specific technical features have been defined in the dependent claims.

According to the processing method provided in this application, the application thread in the application process is managed and controlled to reduce the quantity of Binder threads in the system server process, the Binder threads in the system server process are occupied by the application process. This avoids the following problem: a single application process exhausts Binder threads in a Binder thread resource pool; consequently, an Android system gets stuck, and even a virtual machine of the entire Android system crashes and restarts, affecting a normal communication service of the Android system. Wherein the second threshold is greater than the first threshold.

An objective of managing and controlling the application thread in the application process is achieved by setting the newly added application thread in the application process to the waiting state. This avoids the following problem: a single application process exhausts Binder threads in a Binder thread resource pool; consequently, an Android system gets stuck, and even a virtual machine of the entire Android system crashes and restarts, affecting a normal communication service of the Android system.

Processing performance of the mobile device is improved by processing the application thread in the waiting state in time.

In the embodiments of the present application, a name of the mobile device constitutes no limitation on the device. In actual implementation, the devices may have other names. Provided that functions of each device are similar to those in the embodiments of the present application, it falls within the scope of the claims of the present application and their equivalent technologies.

These aspects or other aspects in the embodiments of the present application are clearer and more comprehensible in descriptions of the following embodiments.

### BRIEF DESCRIPTION OF DRAWINGS

FIG. 1 is a schematic diagram of Binder communication according to an embodiment of the present application;
FIG. 2 is a simplified schematic structural diagram of a mobile device according to an embodiment of the present application;
FIG. 3 is a flowchart of a processing method according to an embodiment of the present application;
FIG. 4 is a flowchart of another processing method according to an embodiment of the present application;
FIG. 5A to FIG. 5E are schematic diagrams of a processing method according to an embodiment of the present application;
FIG. 6 is a schematic diagram of comparison between different cases of a Binder thread resource pool according to an embodiment of the present application;
FIG. 7 is a flowchart of still another processing method according to an embodiment of the present application;
FIG. 8 is a flowchart of yet another processing method according to an embodiment of the present application;
FIG. 9A to FIG. 9E are schematic diagrams of still yet another processing method according to an embodiment of the present application;
FIG. 10 is a flowchart of a further processing method according to an embodiment of the present application;
FIG. 11 is a flowchart of a still further processing method according to an embodiment of the present application;
FIG. 12 is a schematic structural diagram of a mobile device according to an embodiment of the present application; and
FIG. 13 is a schematic structural diagram of another mobile device according to an embodiment of the present application.

### DESCRIPTION OF EMBODIMENTS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

An application refers to an APP that a user installs on a mobile device (for example, a mobile phone), including commonly used third-party applications such as WeChat and QQ, and applications, such as message and contact, on the mobile device at delivery.

A process is a running activity of a program with an independent function with regard to a data set. The process may apply for and own a system resource, and is a dynamic concept, an active entity, and a carrier for application running. One application comprises at least one process. The process is not just a program code, but also comprises a current activity, and is represented by a value of a program counter and content of the processing register.

A thread is sometimes referred to as a lightweight process (Lightweight Process, LWP), and is a minimum unit of a program execution flow. A standard thread consists of a thread identifier, a current instruction pointer, a register set, and a stack. The thread refers to a subunit of the process. One process may include a plurality of threads. A processing manner of each thread is linear. If a plurality of tasks are to be processed, multithread concurrent processing is needed.

Binder is one of inter-process communication manners in an Android system, and the Binder itself is also a thread. Binder communication refers to the communication between an application thread in an application process and a Binder thread in a system server process. For example, if an application A invokes an interface of a system server, an application A invokes a thread A in the interface, and a corresponding Binder thread B exists at a system server end. The application A communicates with the application B. For example, at the same moment, a Binder thread resource pool may provide at most 32 Binder threads available, and the 32 Binder threads may be used by different applications. Every time an application starts a thread and invokes the system server, a Binder thread is occupied. A quantity of Binder threads in the system server process includes: a quantity of Binder threads in all interfaces in the system server process; a quantity of Binder threads in at least one interface in the system server process; or a quantity of Binder threads in one interface in the system server process.

However, some application processes may start a large quantity of application threads in a short time to communicate with Binder threads in the system server process. For example, a user uses a third-party application for downloading (such as QQDownload), and the application uses a multithreaded concurrent manner to achieve a maximum download processing capability. A thread invokes a time-consuming interface to access the system server. If a speed of starting a thread by the application is greater than an interface processing speed, the system server continuously allocates Binder threads to the QQDownload, and all Binder threads are occupied by the application. Instead of speeding up download processing, this causes an entire system to get stuck and even restarted, because another application cannot seize a Binder thread to continue with service processing.

In another scenario, when a user uses a mobile phone, the application A is started, and a plurality of threads of the application A invoke a PackageManagerService module. The application A starts the threads at a low speed, causing no congestion. However, because the system server gets stuck at a backend (such as the pack manager service (PackageManagerService) module), a slow processing speed causes more and more Binder threads to be occupied, causing the entire system to get stuck and even restarted. For example, the user opens music to play music, but no Binder thread can be allocated for playing music because the PackageManagerService module gets stuck, and all Binder threads are stuck in accessing the PackageManagerService module. The user may not perceive that a service is stuck at the backend, but if the Binder threads are exhausted, the user may perceive that the mobile device is stuck.

To resolve a problem that a normal communication service of the Android system is affected due to Binder thread exhaustion, the embodiments of the present application provide a processing method. A basic principle of the processing method is: when a quantity of application threads in an application process of an application is greater than or equal to a first threshold, determining a quantity of Binder threads, the Binder threads are occupied by the application process in each interface in a system server process; and keeping a quantity of Binder threads not greater than a second threshold, the Binder threads are occupied by the application process in at least one interface in the system server process, wherein one application thread in the application process corresponds to one Binder thread in the system server process, and the second threshold is less than a quantity of all Binder threads included in the system server process. According to the processing method provided in the embodiments of the present application, the application thread in the application process is managed and controlled to reduce the quantity of Binder threads in the system server process, the Binder threads in the system server process are occupied by the application process. This avoids the following problem: a single application process exhausts Binder threads in a Binder thread resource pool; consequently, an Android system gets stuck, and even a virtual machine of the entire Android system crashes and restarts, affecting a normal communication service of the Android system.

The following describes implementations of the embodiments of the present application in detail with reference to accompanying drawings.

In the embodiments of the present application, an example in which a mobile device is a mobile phone is used for description. The following describes components of the mobile phone in detail with reference to the accompanying drawings.

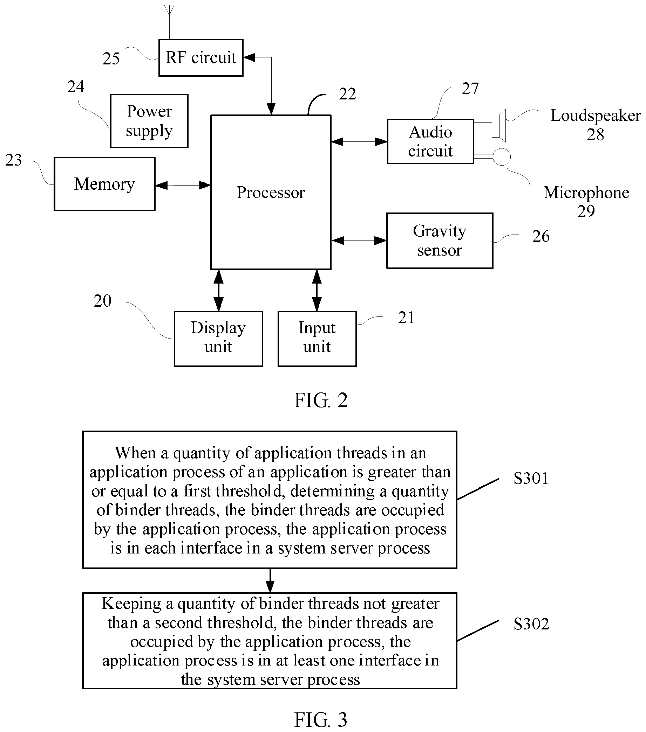

As shown in FIG. 2, the mobile phone may include components such as a display unit 20, an input unit 21, a processor 22, a memory 23, a power supply 24, a radio frequency (Radio Frequency, RF) circuit 25, a gravity sensor 26, an audio circuit 27, a loudspeaker 28, and a microphone 29. These components may be connected through a bus, or may be directly connected. A person skilled in the art may understand that a structure of the mobile phone shown in FIG. 2 constitutes no limitation on the mobile phone, and the mobile phone may include more components than those shown in the figure, or combine some components, or have different component deployments.

The display unit 20 is operably connected to the processor 22, and is configured to receive and display a processing result returned by the processor 22. For example, the display unit 20 may be configured to display an image captured by using a camera, and various menus of the mobile phone. A graphical user interface (Graphical User Interface, GUI) is usually configured on the display unit 20. The GUI is configured to provide an easy-to-use interface between a user and an operating system running on the mobile phone.

The input unit 21 may be a single-point or multipoint input unit. The input unit 21 is operably connected to the processor 22, and is configured to receive an input operation of the user. The input unit 21 may be a touchpad or a touchscreen that is disposed above or in front of the display unit 20. The touchpad or the touchscreen may collect a touch operation performed on or near the touchpad or the touchscreen by the user (for example, an operation performed on the touchscreen or near the touchscreen by the user by using any proper object or accessory such as a finger or a stylus), and drive a corresponding connection apparatus according to a preset program. For example, the touchpad or the touchscreen may be implemented based on a sensing technology such as capacitance sensing, resistance sensing, surface acoustic wave sensing, pressure sensing, or light sensing. The touchpad or the touchscreen may be integrated with the display unit 20, or may be an independent component.

As a control center of the mobile phone, the processor 22 connects various parts of the entire mobile phone through various interfaces and lines, and performs various functions and processes data of the mobile phone by running or executing a software program and/or a module stored in the memory 23 and by invoking data stored in the memory 23, to perform overall monitoring on the mobile phone. In specific implementation, in an embodiment, the processor 22 may include one or more processing units, and an application processor and a modem processor may be integrated into the processor 22. Wherein the application processor mainly processes an operating system, a user interface, an application, and the like, and the modem processor mainly processes wireless communication. It may be understood that, alternatively, the modem processor may not be integrated into the processor 22.

In this embodiment of the present application, the processor 22 is mainly configured to: when a quantity of application threads in an application process of an application is greater than or equal to a first threshold, determine a quantity of Binder threads, the Binder threads are occupied by the application process in each interface in a system server process; and keeping a quantity of Binder threads not greater than a second threshold, the Binder threads are occupied by the application process in at least one interface in the system server process, wherein one application thread in the application process corresponds to one Binder thread in the system server process, and the second threshold is less than a quantity of all Binder threads included in the system server process.

The memory 23 may be configured to store data, a software program, and a module; and may be a volatile memory (Volatile Memory) such as a random access memory (Random-Access Memory, RAM), may be a nonvolatile memory (Non-volatile Memory) such as a read-only memory (Read-Only Memory, ROM), a flash memory (Flash Memory), a hard disk drive (Hard Disk Drive, HDD), or a solid state drive (Solid-State Drive, SSD), may be a combination of the foregoing types of memories, or may be a removable storage medium such as a secure digital (Secure Digital, SD) storage card. Specifically, the memory 23 may store program code, and the program code is used to enable the processor 22 to perform the processing method provided in the embodiments of the present application.

The power supply 24 may be a battery, and is logically connected to the processor 22 by a power management system, to implement functions such as charging management, discharging management, and power consumption management by the power management system.

The RF circuit 25 may be configured to receive and send information, or receive and send a signal during a call. Particularly, the RF circuit 25 sends received information to the processor 22 for processing, and sends a signal generated by the processor 22. The RF circuit usually includes but is not limited to an antenna, at least one amplifier, a transceiver, a coupler, a low noise amplifier (Low Noise Amplifier, LNA), a duplexer, and the like. In addition, the RF circuit 25 may further communicate with a network and another device through wireless communication.

The gravity sensor (Gravity Sensor) 26 may detect acceleration values of the mobile phone in all directions (generally, three axes), and may detect, in a stationary state, a value and direction of gravity. The gravity sensor 26 may be used for an application for identifying a mobile phone gesture (for example, switching between landscape and portrait screens, a related game, or a magnetometer gesture calibration), a vibration-identification-related function (for example, a pedometer and tapping), and the like. It should be noted that, the mobile phone may further include other sensors such as a pressure sensor, an optical sensor, a gyroscope, a barometer, a hygrometer, a thermometer, and an infrared sensor. Details are not described herein.

The audio circuit 27, the loudspeaker 28, and the microphone 29 may provide an audio interface between the user and the mobile phone. The audio circuit 27 may transmit, to the loudspeaker 28, an electrical signal converted from received audio data, and the loudspeaker 28 converts the electrical signal into a sound signal for outputting. In addition, the microphone 29 converts a collected sound signal into an electrical signal, and the audio circuit 27 converts the electrical signal into audio data after receiving the electrical signal, and then outputs the audio data to the RF circuit 25 to send the audio data to, for example, another mobile phone, or outputs the audio data to the processor 22 for further processing.

In addition, an operating system runs above the foregoing components. An application may be installed and run in the operating system. In addition, although not shown, the mobile phone may further include a Wi-Fi module, a Bluetooth module, a camera and other components. The Wi-Fi module may be a module including a Wi-Fi chip and a driver of the Wi-Fi chip. The Wi-Fi chip has a capability of running a wireless Internet standard protocol. The Bluetooth module is a printed circuit board assembly (Printed Circuit Board Assembly, PCBA) with integrated a Bluetooth function, and is used for short-range wireless communication.

The following specifically describes processing methods provided in the embodiments of the present application with reference to the accompanying drawings.

FIG. 3 is a flowchart of a processing method according to an embodiment of the present application. As shown in FIG. 3, the method may include the following steps:
S301. When a quantity of application threads in an application process of an application is greater than or equal to a first threshold, determining a quantity of Binder threads, the Binder threads are occupied by the application process in each interface in a system server process.

When a user uses an application installed in an Android system, the following case often occurs: a condition is triggered in the application, and another application is opened. For example, if a file is sent to a friend by using a QQ application on a mobile phone, a system-provided file manager application is opened; if a photo is sent to a friend, a system-provided photo album application or camera application is opened. In the foregoing case, an application process of the QQ application needs to access a system server process, and Binder communication needs to be performed between an application thread in the application process and a Binder thread in the system server process.

It should be noted that one application may have a plurality of application processes. One application process may access different interfaces in the system server process. The system server process includes n Binder threads, and the n Binder threads may belong to different interfaces. In this case, the Binder threads in the system server process may belong to different interfaces, the Binder threads in the system server process are occupied by the application process. Therefore, when the quantity of application threads in the application process of the application is greater than or equal to the first threshold, the quantity of Binder threads needs to be determined, the Binder threads are occupied by the application process in each interface (each interface) in the system server process, to confirm in which interface a largest quantity of Binder threads occupied by the application process. The first threshold may be preset based on experience. For example, one application process includes at most 16 Binder threads by default, and the first threshold may be set to 8. One application thread in the application process corresponds to one Binder thread in the system server process. Different tasks may be performed through Binder communication between different application threads and Binder threads. Certainly, the same task may be performed through the Binder communication between different application threads and Binder threads.

In addition, this embodiment of the present application provides an implementation of monitoring the quantity of application threads in the application process. After a mobile device starts an application thread in the application process, a value M of started application threads is updated. An initial value of M is 0, and M is increased by one when one application thread is started. M is decreased by one after the mobile device processes Binder communication between an application thread and a Binder thread. The mobile device determines whether M is greater than or equal to the first threshold. If M is greater than or equal to the first threshold, the quantity of Binder threads occupied by the application process in each interface in the system server process is determined. Certainly, the application process may continue to start an application thread. If M is less than the first threshold, the application process may continue to start an application thread, and the mobile device processes Binder communication between the application thread in the application process and the Binder thread in the system server process.

According to the processing method described in this embodiment of the present application, with respect to the determining of the quantity of Binder threads occupied by the application process in each interface in the system server process, in other words, with respect to monitoring a quantity of Binder threads occupied by the application process, a condition is added. The condition is when the quantity of application threads in the application process of the application is greater than or equal to the first threshold, to avoid performance degradation caused by continuous monitoring.

Certainly, There is also an implementable method. After the mobile device starts the application thread in the application process, the mobile device directly monitors the quantity of Binder threads occupied by the application process in each interface in the system server process, without waiting until the quantity of application threads in the application process is greater than or equal to the first threshold, and then monitoring the quantity of Binder threads occupied by the application process in each interface in the system server process.

S302. Keeping a quantity of Binder threads not greater than a second threshold, the Binder threads are occupied by the application process in at least one interface in the system server process.

It may be understood that, the quantity of Binder threads occupied by the application process in each interface in the system server process is not necessarily greater than or equal to the second threshold. In other words, the quantity of Binder threads occupied by the application process in some interfaces is greater than or equal to the second threshold, and the quantity of Binder threads occupied by the application process in some interfaces is less than the second threshold. The second threshold is less than a quantity of all Binder threads included in the system server process.

When the quantity of Binder threads occupied by the application process in at least one interface in the system server process is greater than or equal to the second threshold, a newly added application thread in the application process corresponding to the at least one interface is kept in a waiting state. It may be understood that the application process may occupy a plurality of interfaces in the system server process. As long as a quantity of Binder threads in one interface in the system server process occupied by the application process is greater than or equal to the second threshold, the newly added application thread in the application process is kept in the waiting state. For example, the application process occupies three interfaces in the system server process, the application process occupies 13 Binder threads in a first interface, the application process occupies one Binder thread in a second interface, and the application process occupies two Binder threads in a third interface. In this case, the application process occupies more Binder threads in the first interface, and the second threshold is reached. Therefore, the newly added application thread in the application process is kept in the waiting state.

Optionally, in an unclaimed embodiment, the interface in the system server process may alternatively not be considered. When the quantity of application threads in an application process of an application is greater than or equal to the first threshold, a quantity of Binder threads in the system server process occupied by the application process is determined. If the quantity of Binder threads in the system server process occupied by the application process is greater than or equal to the second threshold, the newly added application thread in the application process is kept in the waiting state.

In addition, keeping a quantity of Binder threads not greater than a second threshold, the Binder threads are occupied by the application process in at least one interface in the system server process, may be understood as follows: when the quantity of Binder threads is less than the second threshold, the Binder threads are occupied by the application process in at least one interface in the system server process, Binder communication is performed between an application thread and a Binder thread, and the newly added application thread in the application process does not need to be managed or controlled.

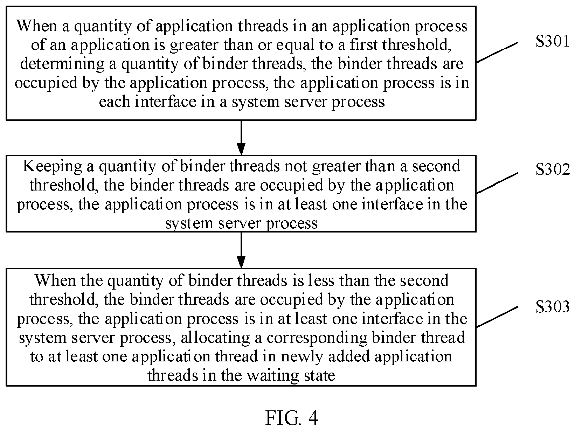

Further, as shown in FIG. 4, when the quantity of Binder threads is greater than or equal to the second threshold, the Binder threads are occupied by the application process in at least one interface in the system server process, after the newly added application thread in the application process corresponding to the at least one interface is kept in a waiting state, the following step may be further included:

S303. When the quantity of Binder threads is less than the second threshold, the Binder threads are occupied by the application process in at least one interface in the system server process, allocating a corresponding Binder thread to at least one application thread in newly added application threads in the waiting state.

A corresponding newly added application thread may be processed based on a sequence of entering the waiting state. For example, a first-in first-out principle is followed. To be specific, when the quantity of Binder threads is less than the second threshold, the Binder threads are occupied by the application process in at least one interface in the system server process, a corresponding Binder thread is first allocated to a newly added application thread first enters the waiting state, and then a corresponding Binder thread is allocated to a newly added application thread enters the waiting state later. For example, application threads newly added in sequence are an application thread 1, an application thread 2, and an application thread 3. First, a corresponding Binder thread is allocated to the application thread 1, then a corresponding Binder thread is allocated to the application thread 2, and finally, a corresponding Binder thread is allocated to the application thread 3. Alternatively, a last-in first-out principle is followed. To be specific, when the quantity of Binder threads is less than the second threshold, the Binder threads are occupied by the application process in at least one interface in the system server process, a corresponding Binder thread is first allocated to a newly added application thread enters the waiting state last. For example, application threads newly added in sequence are an application thread 1, an application thread 2, and an application thread 3. First, a corresponding Binder thread is allocated to the application thread 3, then a corresponding Binder thread is allocated to the application thread 2, and finally, a corresponding Binder thread is allocated to the application thread 1.

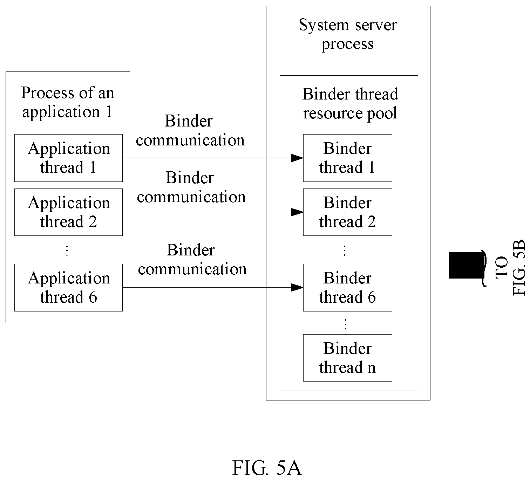

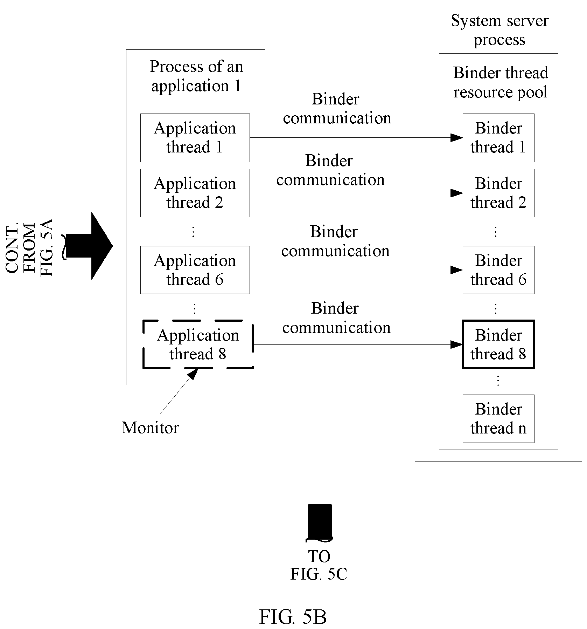

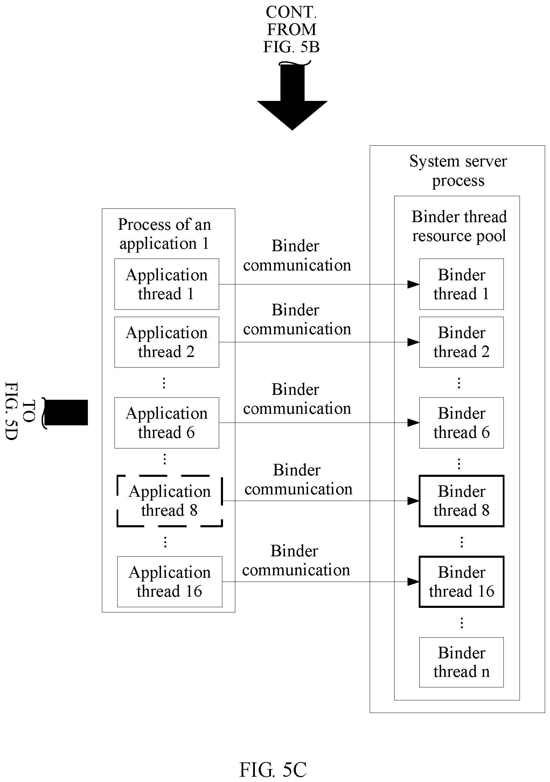

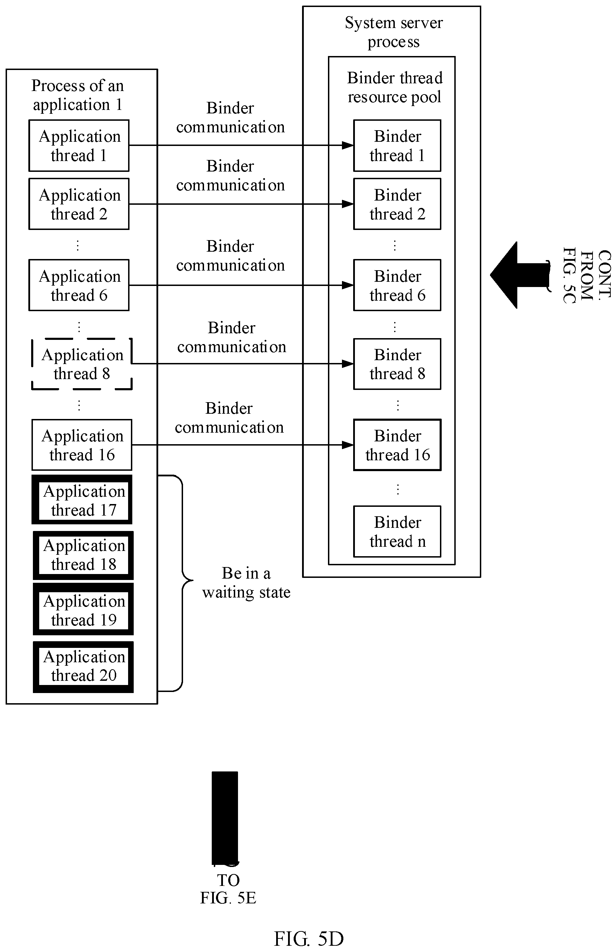

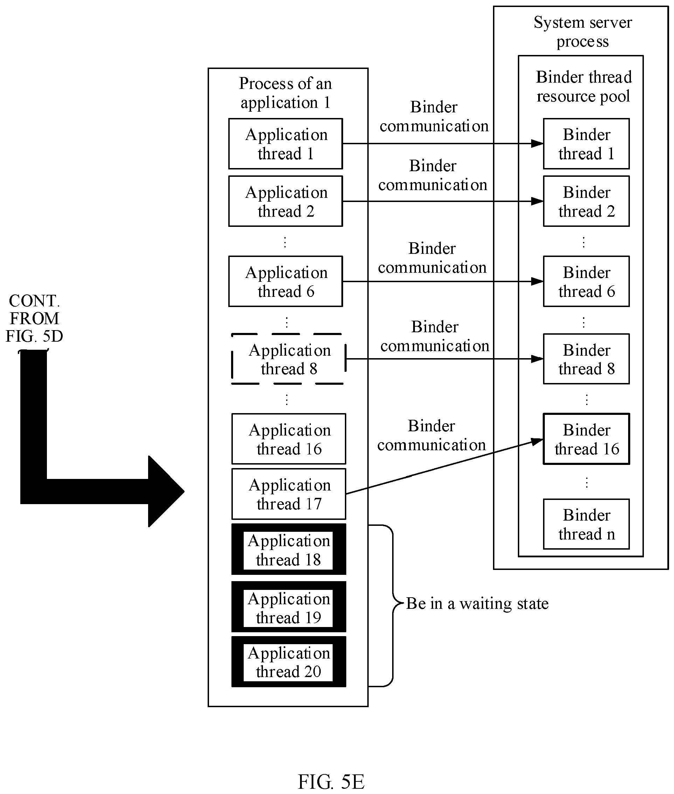

FIG. 5A to FIG. 5E are schematic diagrams of a processing method according to an embodiment of the present application. A Binder thread resource pool of a system server process includes n Binder threads, and the n Binder threads may belong to different interfaces (not shown in the figure). Usually, 32 Binder threads (resources) in the Binder thread resource pool may be used at the same moment. It is assumed that a first threshold is 8 and a second threshold is 16. For example, an application process starts 20 threads to perform Binder communication with the system server process. FIG. 5A indicates that a process of an application 1 starts six application threads. In this case, a quantity of application threads in the process of the application 1 is less than the first threshold 8. Therefore, a quantity of Binder threads occupied by the process of the application 1 in each interface in the system server process does not need to be determined. The process of the application 1 may continue to start an application thread to perform Binder communication with a Binder thread. FIG. 5B indicates that when the process of the application 1 starts the eighth application thread, it is detected that the quantity of application threads in the process of the application 1 is equal to the first threshold 8. In this case, the quantity of Binder threads occupied by the process of the application 1 in each interface in the system server process is determined, and the process of the application 1 may still continue to start an application thread to perform Binder communication with a Binder thread. FIG. 5C indicates that the process of the application 1 starts the sixteenth application thread to perform Binder communication with a Binder thread, and then a quantity of Binder threads occupied by the process of the application 1 in the system server process reaches the second threshold 16. Certainly, the 16 Binder threads occupied by the process of the application 1 may belong to the same interface or different interfaces. For example, if the process of the application 1 occupies two interfaces, the process of the application 1 occupies 15 Binder threads in one interface and one Binder thread in the other interface. FIG. 5D indicates that the seventeenth application thread to the twentieth application thread started by the process of the application 1 are kept in a waiting state. FIG. 5E indicates that, after the Binder communication between the sixteenth application thread in the process of the application 1 and the occupied sixteenth Binder thread is completed, a quantity of Binder threads occupied by the process of the application 1 in at least one interface in the system server process is less than the second threshold 16. A corresponding Binder thread may be allocated to the seventeenth application thread in the waiting state in the process of the application 1. For example, the sixteenth Binder thread is allocated to the seventeenth application thread in the process of the application 1. This ensures that a quantity of Binder communication between application threads and Binder threads, simultaneously processed by a mobile device, is not greater than 16.

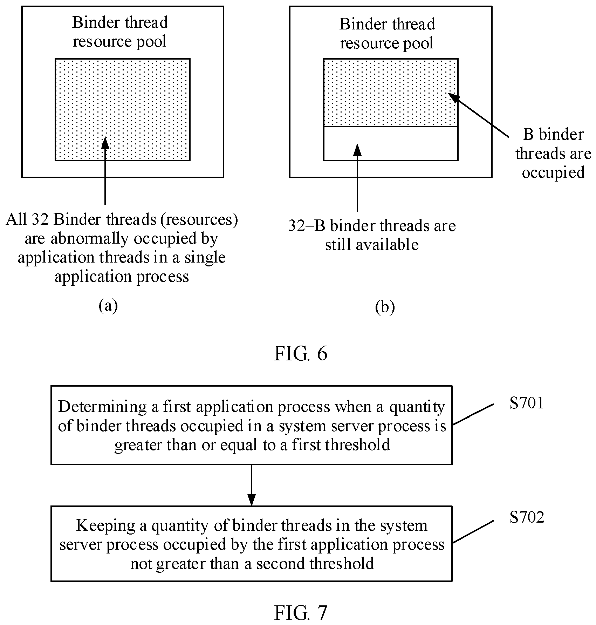

FIG. 6 is a schematic diagram of comparison between different cases of a Binder thread resource pool according to an embodiment of the present application. A part (a) in FIG. 6 shows a case in which all 32 Binder threads (resources) in the Binder thread resource pool are abnormally occupied by application threads in a single application process at the same moment. A part (b) in FIG. 6 shows a processing method described in the embodiments of the present application. The application threads in the single application process occupy only B Binder threads in the Binder thread resource pool at the same moment, and 32-B Binder threads are still available, wherein B is less than or equal to a second threshold.

According to the processing method provided in this embodiment of the present application, the application thread in the application process is managed and controlled to reduce the quantity of Binder threads in the system server process occupied by the application process. This avoids the following problem: a single application process exhausts the Binder threads in the Binder thread resource pool; consequently, the Android system gets stuck, and even a virtual machine of the entire Android system crashes and restarts, affecting a normal communication service of the Android system.

FIG. 7 is a flowchart of a processing method according to an example of the present application. This example is not included in the scope of the claims as such. As shown in FIG. 7, the method may include the following steps:
S701. Determining a first application process when a quantity of Binder threads occupied in a system server process is greater than or equal to a first threshold.

The Binder threads in the system server process may be occupied by a plurality of application processes. When the quantity of Binder threads occupied in the system server process is greater than or equal to the first threshold, searching for an application process occupying a largest quantity of Binder threads in the system server process, among the plurality of application processes occupying the Binder threads in the system server process. The first application process is determined as the application process occupying the largest quantity of Binder threads in the system server process. The first threshold is less than a quantity of all Binder threads included in the system server process.

Optionally, an alternative solution of step S701 comprises: determining a first application process when a quantity of application threads in an application process of an application is greater than or equal to a first threshold.

S702. Keeping a quantity of Binder threads in the system server process occupied by the first application process not greater than a second threshold.

When the quantity of Binder threads in the system server process occupied by the first application process is greater than or equal to the second threshold, a newly added application thread in the first application process is kept in a waiting state. The second threshold is less than a quantity of all the Binder threads included in the system server process.

In addition, when the quantity of Binder threads in the system server process is greater than or equal to the first threshold, after the first application process is determined, the newly added application thread in the first application process may be directly managed and controlled, without a need of waiting until the quantity of Binder threads in the system server process occupied by the first application process is greater than or equal to the second threshold, and then managing and controlling the newly added application thread in the first application process.

Keeping a quantity of Binder threads in the system server process occupied by the first application process not greater than a second threshold, may be understood as follows: when the quantity of Binder threads in the system server process occupied by the first application process is less than the second threshold, Binder communication is performed between an application thread and a Binder thread, and the newly added application thread in the first application process does not need to be managed or controlled.

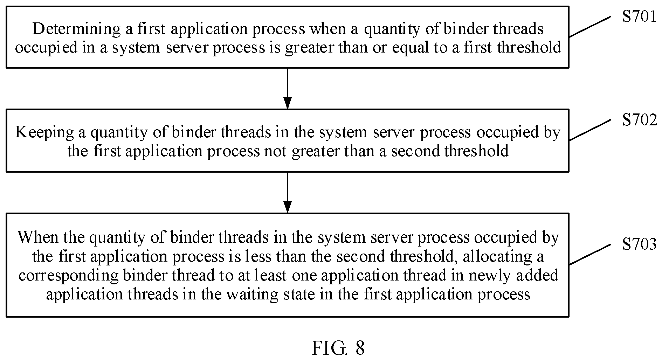

Further, as shown in FIG. 8, when the quantity of Binder threads in the system server process occupied by the first application process is greater than or equal to the second threshold, after the newly added application thread in the first application process is kept in the waiting state, the following step may be further included: S703. When the quantity of Binder threads in the system server process occupied by the first application process is less than the second threshold, allocating a corresponding Binder thread to at least one application thread in newly added application threads in the waiting state in the first application process.

A corresponding newly added application thread may be processed based on a sequence of entering the waiting state. For example, a first-in first-out principle is followed. To be specific, when the quantity of Binder threads in the system server process occupied by the first application process is less than the second threshold, a corresponding Binder thread is first allocated to a newly added application thread first enters the waiting state, and then a corresponding Binder thread is allocated to a newly added application thread enters the waiting state later. For example, application threads newly added in sequence are an application thread 1, an application thread 2, and an application thread 3. First, a corresponding Binder thread is allocated to the application thread 1, then a corresponding Binder thread is allocated to the application thread 2, and finally, a corresponding Binder thread is allocated to the application thread 3. Alternatively, a last-in first-out principle is followed. To be specific, when the quantity of Binder threads in the system server process occupied by the first application process is less than the second threshold, a corresponding Binder thread is first allocated to a newly added application thread enters the waiting state last. For example, application threads newly added in sequence are an application thread 1, an application thread 2, and an application thread 3. First, a corresponding Binder thread is allocated to the application thread 3, then a corresponding Binder thread is allocated to the application thread 2, and finally, a corresponding Binder thread is allocated to the application thread 1.

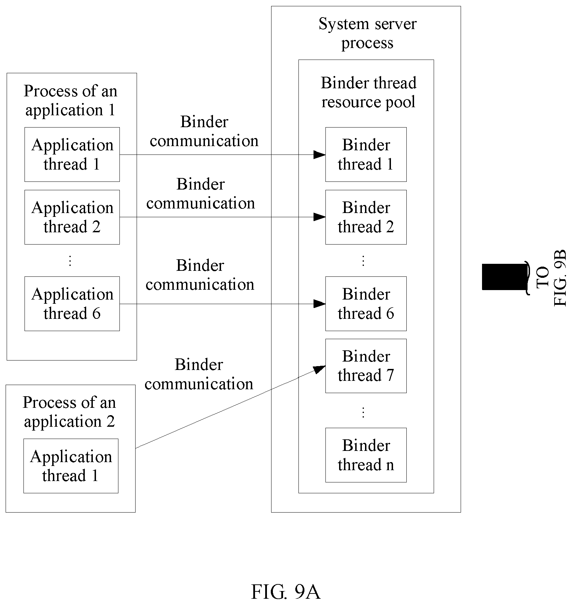

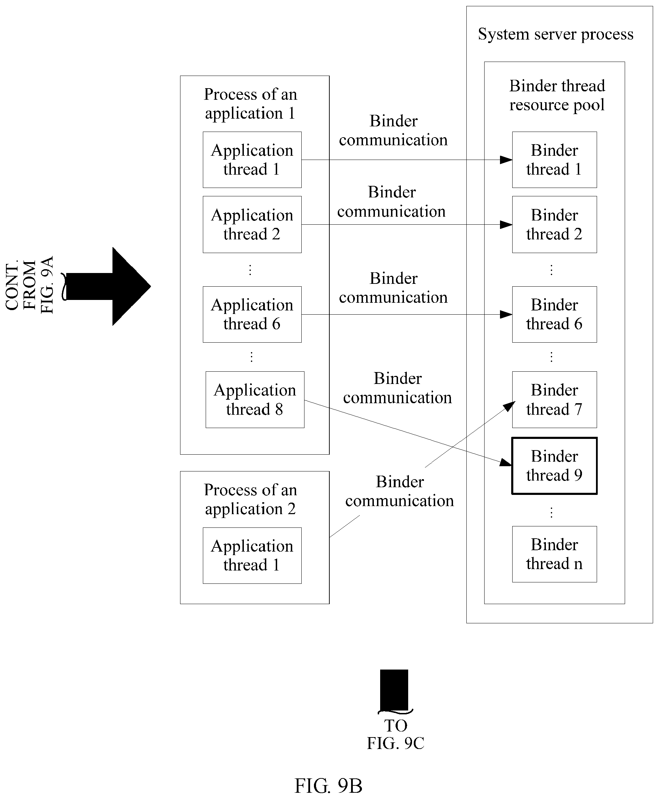

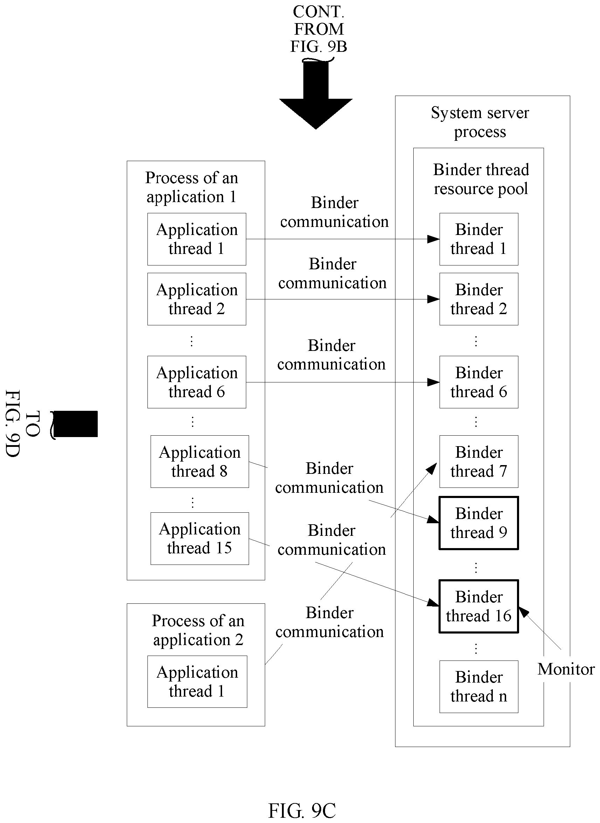

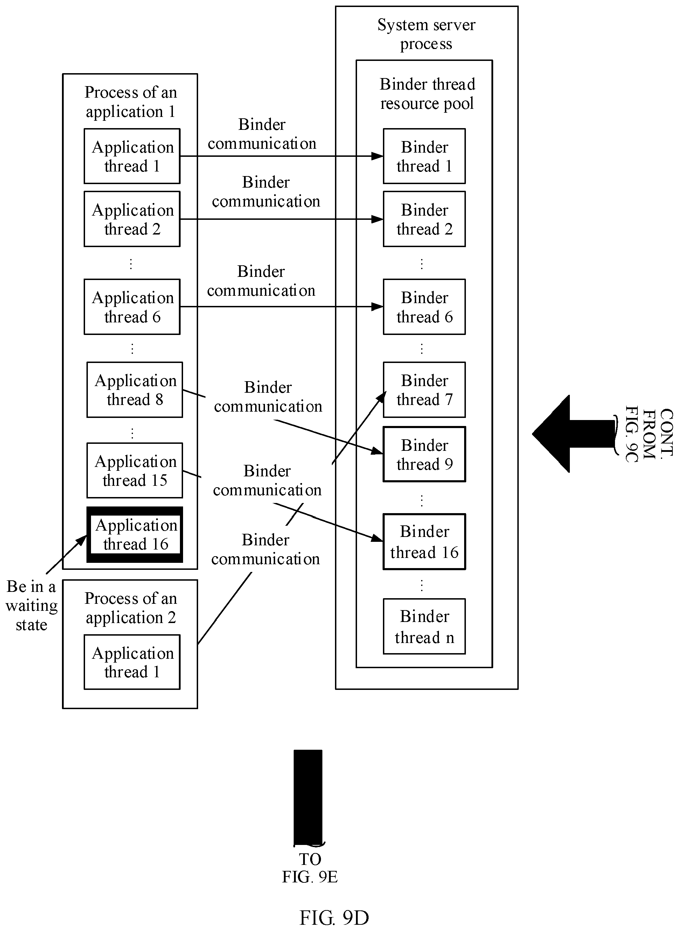

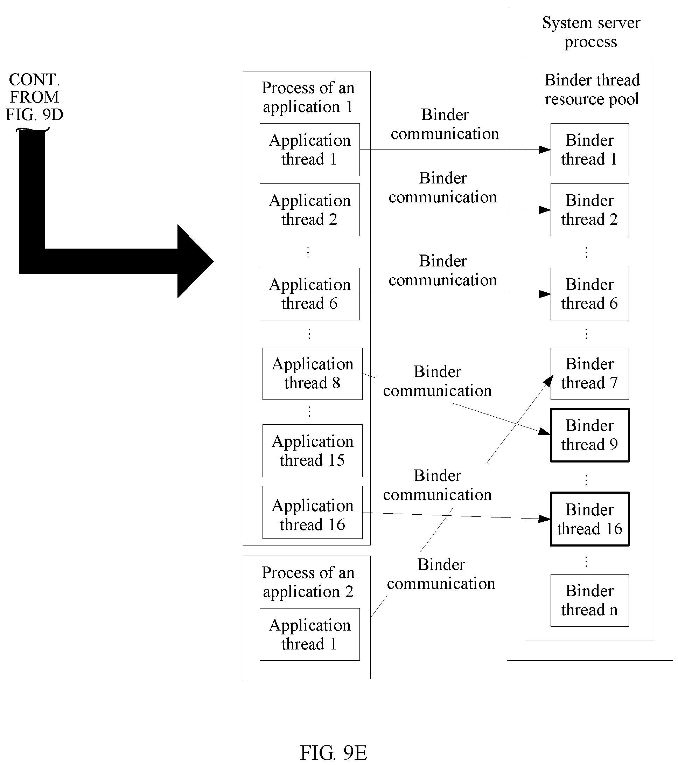

FIG. 9A to FIG. 9E are schematic diagrams of a processing method according to an example of the present application. This example is not included in the scope of the claims as such. A Binder thread resource pool of a system server process includes n Binder threads, and the n Binder threads may belong to different interfaces (not shown in the figure). Usually, 32 Binder threads (resources) in the Binder thread resource pool may be used at the same moment. It is assumed that a first threshold is 16 and a second threshold is 15. For example, FIG. 9A indicates that a process of an application 1 starts six application threads and a process of an application 2 starts one application thread. In this case, a total quantity of Binder threads in the system server process is 7 that is less than the first threshold 16, and an application process of a Binder thread in the system server process occupied by an application process does not need to be managed or controlled. The process of the application 1 may continue to start an application thread to perform Binder communication with a Binder thread. The process of the application 2 may continue to start an application thread to perform Binder communication with a Binder thread. FIG. 9B indicates that the process of the application 1 continues to start two application threads. In this case, the quantity of Binder threads in the system server process is 9 that is less than the first threshold 16. Therefore, the process of the application 1 can still continue to start an application thread to perform Binder communication with a Binder thread, and the process of the application 2 can still continue to start an application thread to perform Binder communication with a Binder thread. FIG. 9C indicates that the process of the application 1 continues to start six application threads. In this case, the quantity of Binder threads in the system server process is 16 that is equal to the first threshold 16. In this case, the process of the application 1 is determined as an application process occupying a largest quantity of Binder threads in the system server process. The process of the application 1 occupies 15 Binder threads in the system server process, and the process of the application 1 is managed and controlled. FIG. 9D indicates the sixteenth application thread started by the process of the application 1 is kept in a waiting state. FIG. 9E indicates that, after Binder communication between the fifteenth application thread in the process of the application 1 and the occupied sixteenth Binder thread is completed, a quantity of Binder threads occupied by the process of the application 1 in at least one interface in the system server process is less than the second threshold 15. A corresponding Binder thread may be allocated to the sixteenth application thread in the waiting state in the process of the application 1. For example, the sixteenth Binder thread is allocated to the sixteenth application thread in the process of the application 1. This ensures that a quantity of Binder communication between application threads and Binder threads, simultaneously processed by a mobile device, is not greater than 16.

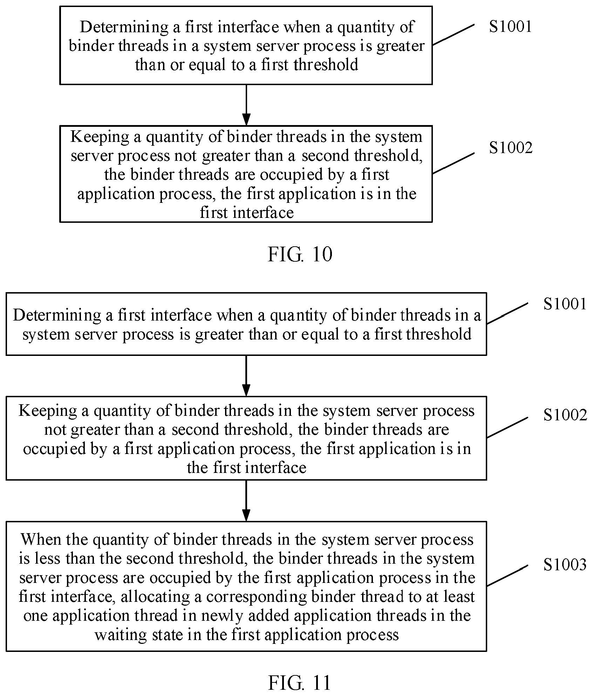

FIG. 10 is a flowchart of a processing method according to an example of the present application. This example is not included in the scope of the claims as such. As shown in FIG. 10, the method may include the following steps:
S1001. Determining a first interface when a quantity of Binder threads in a system server process is greater than or equal to a first threshold.

The system server process includes a plurality of interfaces. The Binder threads in the system server process may be occupied by a plurality of application processes. When the quantity of Binder threads occupied in the system server process is greater than or equal to the first threshold, searching for an interface occupying a largest quantity of Binder threads in the plurality of interfaces included in the system server process. The first interface is determined as the interface with the largest quantity of Binder threads occupied in the system server process.

Optionally, an alternative solution of S1001 includes: determining a first interface when a quantity of application threads in an application process of an application is greater than or equal to a first threshold.

S1002. Keeping a quantity of Binder threads in the system server process not greater than a second threshold, the Binder threads are occupied by a first application process, the first application is in the first interface.

The first interface is also occupied by a plurality of application processes. An application process occupying a largest quantity of Binder threads is searched for in the first interface, and the first application process is determined as the application process occupying the largest quantity of Binder threads in the first interface.

When the quantity of Binder threads in the system server process occupied by the first application process in the first interface is greater than or equal to the second threshold, a newly added application thread in the first application process is kept in a waiting state. The second threshold is less than a quantity of all Binder threads included in the system server process.

In addition, when the quantity of Binder threads occupied in the system server process is greater than or equal to the first threshold, after the first application process is determined, the newly added application thread in the first application process may be directly managed and controlled, without a need of waiting until the quantity of Binder threads in the system server process occupied by the first application process in the first interface is greater than or equal to the second threshold, and then managing and controlling the newly added application thread in the first application process.

Keeping a quantity of Binder threads in the system server process not greater than a second threshold, the system server process is occupied by the first application process, the first application process is in the first interface, may be alternatively understood as follows: when the quantity of Binder threads in the system server process is less than a second threshold, the system server process is occupied by the first application process, the first application process is in the first interface, Binder communication is performed between an application thread and a Binder thread, and the newly added application thread in the application process occupying the Binder threads in the first interface does not need to be managed or controlled.

Further, as shown in FIG. 11, when the quantity of Binder threads in the system server process is greater than or equal to a second threshold, the system server process is occupied by the first application process, the first application process is in the first interface, after the newly added application thread in the first application process is kept in the waiting state, the following step may be further included: S1003. When the quantity of Binder threads in the system server process is less than the second threshold, the Binder threads in the system server process are occupied by the first application process, allocating a corresponding Binder thread to at least one application thread in newly added application threads in the waiting state in the first application process.

A corresponding newly added application thread may be processed based on a sequence of entering the waiting state. For example, a first-in first-out principle is followed. To be specific, when the quantity of Binder threads in the system server process is less than the second threshold, the Binder threads in the system are occupied by the first application process, a corresponding Binder thread is first allocated to a newly added application thread first enters the waiting state, and then a corresponding Binder thread is allocated to a newly added application thread enters the waiting state later. For example, application threads newly added in sequence are an application thread 1, an application thread 2, and an application thread 3. First, a corresponding Binder thread is allocated to the application thread 1, then a corresponding Binder thread is allocated to the application thread 2, and finally, a corresponding Binder thread is allocated to the application thread 3. Alternatively, a last-in first-out principle is followed. To be specific, when the quantity of Binder threads in the system server process is less than the second threshold, the Binder threads in the system server process are occupied by the first application process, a corresponding Binder thread is first allocated to a newly added application thread enters the waiting state last. For example, application threads newly added in sequence are an application thread 1, an application thread 2, and an application thread 3. First, a corresponding Binder thread is allocated to the application thread 3, then a corresponding Binder thread is allocated to the application thread 2, and finally, a corresponding Binder thread is allocated to the application thread 1.

For example, refer to dynamic schematic diagrams shown in FIG. 9A to FIG. 9E. FIG. 9C indicates that a process of an application 1 continues to start six application threads. In this case, the quantity of Binder threads in the system server process is 16 that is equal to the first threshold 16. In this case, a Binder thread 1 to a Binder 16 all belong to the first interface, and the process of the application 1 is the application process occupying the largest quantity of Binder threads in the first interface. The process of the application 1 is determined as an application process occupying a largest quantity of Binder threads in the system server process, and the process of the application 1 is managed and controlled. For other detailed descriptions, refer to the explanations in FIG. 9A to FIG. 9E. Details are not described again in this embodiment of the present application.

The Binder communication is performed between the application process and the system server process. The application threads in the application process correspond to the Binder threads in the system server process in a one-to-one manner. In other words, one application thread performs Binder communication with one Binder thread. When the application process starts an ith application thread, a first application thread to an (i-1)th application thread may be performing Binder communication with i-1 Binder threads. Therefore, the application threads in the application process may be managed and controlled from a unilateral aspect of the application process. This prevents a single application process from exhausting Binder threads in a Binder thread resource pool.

An embodiment of the present application provides a processing method, applied to a mobile device with a plurality of applications installed, comprising: when a quantity of application threads in an application process of an application is greater than or equal to a first threshold, keeping a quantity of Binder threads in a system server process not greater than a second threshold, the Binder threads in the system server process are occupied by the application process.

In a possible implementation, keeping a quantity of Binder threads in a system server process not greater than a second threshold, the Binder threads in the system server process are occupied by the application process, comprising: when the quantity of Binder threads in the system server process is greater than or equal to the second threshold, the Binder threads in the system server process are occupied by the application process, keeping a newly added application thread in the application process in a waiting state.

In another possible implementation, keeping a quantity of Binder threads in a system server process not greater than a second threshold, the Binder threads in the system server process are occupied by the application process, comprising: when the quantity of Binder threads in the system server process is greater than or equal to the second threshold, the Binder threads in the system server process are occupied by the application process, keeping a newly added application thread in the application process in a waiting state; and when the quantity of Binder threads in the system server process is less than the second threshold, the Binder threads in the system server process are occupied by the application process, allocating a corresponding Binder thread to at least one application thread in newly added application threads in the waiting state. Processing performance of the mobile device is improved by processing the application thread in the waiting state in time.

In another possible implementation, keeping a quantity of Binder threads in a system server process not greater than a second threshold, the Binder threads in the system server process are occupied by the application process, comprising: when a quantity of application threads started by the application process is greater than or equal to the second threshold, keeping a newly added application thread in the application process in a waiting state.

In another possible implementation, keeping a quantity of Binder threads in a system server process not greater than a second threshold, the Binder threads in the system server process are occupied by the application process, comprising: when a quantity of application threads started by the application process is greater than or equal to the second threshold, keeping a newly added application thread in the application process in a waiting state; and when the quantity of application threads started by the application process is less than the second threshold allocating a corresponding Binder thread to at least one application thread in newly added application threads in the waiting state. Processing performance of the mobile device is improved by processing the application thread in the waiting state in time.

In another possible implementation, before keeping a quantity of Binder threads in a system server process not greater than a second threshold, the Binder threads in the system server process are occupied by the application process, the method further comprises: determining the quantity of application threads started by the application process. Reliability of application thread management and controlling can be effectively improved by determining the application threads started by the application process twice.

In addition, whether a Binder thread is limited may be known based on a Binder state obtained by using a command (adb shell kill -3 dump systemserver). The processing method described in this embodiment of the present application can be adopted for an upgraded release of Binder (hwbinder), a file descriptor (fd), and a socket (socket), in addition to a thread.

The foregoing mainly describes the solutions provided in the embodiments of the present application from a perspective of interaction between network elements. It may be understood that, to implement the foregoing functions, each network element such as the mobile device includes a corresponding hardware structure and/or software module for performing each function. A person skilled in the art should easily be aware that, in combination with the algorithms steps of the examples described in the embodiments disclosed in this specification, the present application may be implemented in hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present application.

In the embodiments of the present application, the mobile device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in the embodiments of the present application, module division is an example, and is merely one logical function division. In actual implementation, another division manner may be used.

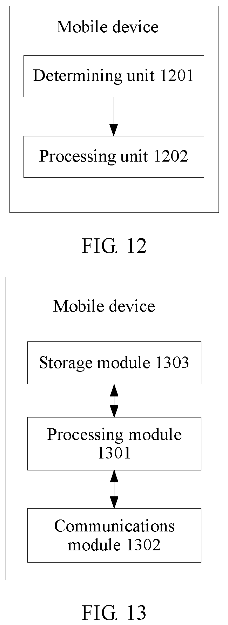

When each functional module is obtained through division based on each corresponding function, FIG. 12 is a schematic diagram of one possible composition of the mobile device involved in the foregoing embodiments. As shown in FIG. 12, the mobile device may include a determining unit 1201 and a processing unit 1202.

The determining unit 1201 is configured to support the mobile device in performing step S301 in the processing method shown in FIG. 3, step S301 in the processing method shown in FIG. 4, step S701 in the processing method shown in FIG. 7, step S701 in the processing method shown in FIG. 8, step S1001 in the processing method shown in FIG. 10, and step S1001 in the processing method shown in FIG. 11.

The processing unit 1202 is configured to support the mobile device in performing step S302 in the processing method shown in FIG. 3, step S302 and step S303 in the processing method shown in FIG. 4, step S702 in the processing method shown in FIG. 7, step S702 and S703 in the processing method shown in FIG. 8, step S1002 in the processing method shown in FIG. 10, and step S1002 and step S1003 in the processing method shown in FIG. 11.

It should be noted that, all related content of each step in the foregoing method embodiments can be cited in functional descriptions of corresponding functional modules, and details are not described herein again.

The mobile device provided in this embodiment of the present application is configured to perform the foregoing methods. Therefore, effects the same as those of the foregoing processing methods can be achieved.

When an integrated unit is used, FIG. 13 is a schematic diagram of another type of possible composition of the mobile device involved in the foregoing embodiments. As shown in FIG. 13, the mobile device includes a processing module 1301 and a communications module 1302.

The processing module 1301 is configured to control and manage an action of the mobile device. For example, the processing module 1301 is configured to support the mobile device in performing step S302 in FIG. 3, step S302 and step S303 in FIG. 4, step S702 in FIG. 7, step S702 and step S703 in FIG. 8, step S1002 in FIG. 10, and step S1002 and step S1003 in FIG. 11, and/or other process of the technology described in this specification. The communications module 1302 is configured to support the mobile device in communicating with other network entity. The mobile device may further include a storage module 1303, configured to store program code and data of the mobile device.

The processing module 1301 may be a processor or a controller. The processor or the controller may implement or execute various exemplary logical blocks, modules, and circuits described with reference to content disclosed in the present application. Alternatively, the processor may be a combination implementing a computing function, for example, a combination of one or more microprocessors, or a combination of a DSP and a microprocessor. The communications module 1302 may be a transceiver, a transceiver circuit, a communications interface, or the like. The storage module 1303 may be a memory.

When the processing module 1301 is a processor, the communication module 1302 is an RF circuit, and the storage module 1303 is a memory, the mobile device involved in this embodiment of the present application may be the mobile device shown in FIG. 2.

The foregoing descriptions about the implementations allow a person skilled in the art to clearly understand that, for the purpose of convenient and brief description, division of the foregoing functional modules is taken as an example for illustration. In actual application, the foregoing functions may be allocated to different functional modules and implemented based on a requirement, that is, an inner structure of an apparatus is divided into different functional modules to implement all or some of the functions described above.

In the several embodiments provided in the present application, it should be understood that the disclosed apparatus and method may be implemented in other manners. For example, the described apparatus embodiment is merely exemplary. For example, the module or unit division is merely one logical function division, and other division manner may be used in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of the embodiments.

In addition, each functional unit in each embodiment of the present application may be integrated into one processing unit, or each unit may exist alone physically, or two or more units may be integrated into one unit. The above integrated unit may be implemented in the form of hardware, or may be implemented in the form of a software functional unit.

When the integrated unit is implemented in the form of a software functional unit and sold or used as an independent product, the integrated unit may be stored in a readable storage medium. Based on such an understanding, the technical solutions in the embodiments of the present application essentially, or the part contributing to the prior art, or all or part of the technical solutions may be implemented in the form of a software product. The software product is stored in a storage medium and includes several instructions for instructing a device (which may be a single-chip microcomputer, a chip, or the like) or a processor (processor) to perform all or part of the steps of the methods described in the embodiments of the present application. The foregoing storage medium includes: any medium that can store program code, such as a USB disk, a removable hard disk, a ROM, a RAM, a magnetic disk, or an optical disc.

The scope of protection shall be defined by the appended claims.

## Claims

1. A processing method, applied to a mobile device with a plurality of applications installed, comprising:
when a quantity of application threads in an application process of an application is greater than or equal to a first threshold, determining (S301) a quantity of binder threads that are occupied by the application process in each interface in a system server process, wherein the binder threads are occupied by the application process by invoking an interface in the system server process, wherein one application thread in the application process corresponds to one binder thread in the system server process; and
keeping (S302) a quantity of binder threads occupied by the application process in at least one interface in the system server process not greater than a second threshold, wherein the second threshold is less than a quantity of all binder threads included in the system server process and greater than the first threshold.

2. The method according to claim 1, wherein keeping the quantity of binder threads not greater than a second threshold, comprises:
when a quantity of binder threads in a first interface in the at least one interface in the system server process is greater than or equal to the second threshold, keeping one or more newly added application threads in a waiting state, wherein the newly added application threads correspond to the first interface in the one or more interfaces in the system server process.

3. The method according to claim 2, wherein the method further comprises:
when the quantity of binder threads in the first interface in the at least one interface in the system server process is less than the second threshold, allocating a corresponding binder thread to at least one application thread in the newly added application threads in the waiting state.

4. A mobile device, wherein a plurality of applications are installed on the mobile device, and the mobile device comprises:
a determining unit (1201), configured for when a quantity of application threads in an application process of an application is greater than or equal to a first threshold, determining (S301) a quantity of binder threads that are occupied by the application process in each interface in a system server process, wherein the binder threads are occupied by the application process by invoking an interface in the system server process, wherein one application thread in the application process corresponds to one binder thread in the system server process; and
a processing unit (1202), configured for keeping (S302) a quantity of binder threads occupied by the application process in at least one interface in the system server process not greater than a second threshold,
wherein the second threshold is less than a quantity of all binder threads included in the system server process and greater than the first threshold.

5. The mobile device according to claim 4, wherein the processing unit is specifically configured for:
when a quantity of binder threads in a first interface in the at least one interface in the system server process is greater than or equal to the second threshold, keeping one or more newly added application threads in a waiting state, wherein the newly added application threads correspond to the first interface in the one or more interfaces in the system server process.

6. The mobile device according to claim 5, wherein the processing unit is specifically configured for:
when the quantity of binder threads in the first interface in the at least one interface in the system server process is less than the second threshold, allocating a corresponding binder thread to at least one application thread in the newly added application threads in the waiting state.

7. A computer readable storage medium, having stored thereon instructions to cause the mobile device of claim 4 to perform the method according to any one of claims 1 to 3.

8. A computer program product comprising instructions to cause the mobile device of claim 4 to perform the method according to any one of claims 1 to 3.

## Patentansprüche

1. Verarbeitungsverfahren, angewandt auf eine mobile Vorrichtung mit einer Mehrzahl von installierten Anwendungen, umfassend:
wenn eine Anzahl von Anwendungsthreads in einem Anwendungsprozess einer Anwendung größer oder gleich einem ersten Schwellenwert ist, Bestimmen (S301) einer Anzahl von "Binder-Threads", die von dem Anwendungsprozess in jeder Schnittstelle in einem Systemserverprozess belegt werden, wobei die "Binder-Threads" von dem Anwendungsprozess durch Aufrufen einer Schnittstelle in dem Systemserverprozess belegt werden, wobei ein Anwendungsthread in dem Anwendungsprozess einem "Binder-Thread" in dem Systemserverprozess entspricht; und
Beibehalten (S302) einer Anzahl von "Binder-Threads", die von dem Anwendungsprozess in mindestens einer Schnittstelle in dem Systemserverprozess belegt sind, die nicht größer ist als ein zweiter Schwellenwert, wobei der zweite Schwellenwert kleiner ist als eine Anzahl aller "Binder-Threads", die in dem Systemserverprozess enthalten sind, und größer als der erste Schwellenwert.

2. Verfahren nach Anspruch 1, wobei das Beibehalten der Anzahl der "Binder-Threads" nicht größer als ein zweiter Schwellenwert, Folgendes umfasst:
wenn eine Anzahl von "Binder-Threads" in einer ersten Schnittstelle in der mindestens einen Schnittstelle in dem Systemserverprozess größer oder gleich dem zweiten Schwellenwert ist, Beibehalten eines oder mehrerer neu hinzugefügter Anwendungsthreads in einem Wartezustand, wobei die neu hinzugefügten Anwendungsthreads der ersten Schnittstelle in der einen oder mehreren Schnittstellen in dem Systemserverprozess entsprechen.

3. Verfahren nach Anspruch 2, wobei das Verfahren ferner Folgendes umfasst:
wenn die Anzahl der "Binder-Threads" in der ersten Schnittstelle in der mindestens einen Schnittstelle in dem Systemserverprozess kleiner als der zweite Schwellenwert ist, Zuweisen eines entsprechenden "Binder-Threads" zu mindestens einem Anwendungsthread in den neu hinzugefügten Anwendungsthreads im Wartezustand.

4. Mobile Vorrichtung, wobei eine Mehrzahl von Anwendungen auf der mobilen Vorrichtung installiert ist und die mobile Vorrichtung Folgendes umfasst:
eine Bestimmungseinheit (1201), die, wenn eine Anzahl von Anwendungsthreads in einem Anwendungsprozess einer Anwendung größer oder gleich einem ersten Schwellenwert ist, zum Bestimmen (S301) einer Anzahl von "Binder-Threads", die von dem Anwendungsprozess in jeder Schnittstelle in einem Systemserverprozess belegt werden, konfiguriert ist, wobei die "Binder-Threads" von dem Anwendungsprozess durch Aufrufen einer Schnittstelle in dem Systemserverprozess belegt werden, wobei ein Anwendungsthread in dem Anwendungsprozess einem "Binder-Thread" in dem Systemserverprozess entspricht; und
eine Verarbeitungseinheit (1202), die zum Beibehalten (S302) einer Anzahl von "Binder-Threads" konfiguriert ist, die von dem Anwendungsprozess in mindestens einer Schnittstelle in dem Systemserverprozess belegt sind, die nicht größer als ein zweiter Schwellenwert ist,
wobei der zweite Schwellenwert kleiner ist als eine Anzahl aller in dem Systemserverprozess enthaltenen "Binder-Threads" und größer als der erste Schwellenwert.

5. Mobile Vorrichtung nach Anspruch 4, wobei die Verarbeitungseinheit insbesondere konfiguriert ist zum:
wenn eine Anzahl von "Binder-Threads" in einer ersten Schnittstelle in der mindestens einen Schnittstelle in dem Systemserverprozess größer oder gleich dem zweiten Schwellenwert ist, Beibehalten eines oder mehrerer neu hinzugefügter Anwendungsthreads in einem Wartezustand, wobei die neu hinzugefügten Anwendungsthreads der ersten Schnittstelle in der einen oder mehreren Schnittstellen in dem Systemserverprozess entsprechen.

6. Mobile Vorrichtung nach Anspruch 5,
wobei die Verarbeitungseinheit insbesondere konfiguriert ist zum:
wenn die Anzahl der "Binder-Threads" in der ersten Schnittstelle in der mindestens einen Schnittstelle im Systemserverprozess kleiner als der zweite Schwellenwert ist, Zuweisen eines entsprechenden "Binder-Threads" zu mindestens einem Anwendungsthread in den neu hinzugefügten Anwendungsthreads im Wartezustand.

7. Computerlesbares Speichermedium, mit darauf gespeicherten Anweisungen, um das mobile Gerät nach Anspruch 4 zu veranlassen, das Verfahren nach einem der Ansprüche 1 bis 3 durchzuführen.

8. Computerprogrammprodukt, das Anweisungen umfasst, um das mobile Gerät nach Anspruch 4 zu veranlassen, das Verfahren nach einem der Ansprüche 1 bis 3 durchzuführen.

## Revendications

1. Procédé de traitement, appliqué à un dispositif mobile dans lequel une pluralité d'applications sont installées, comprenant :
lorsqu'une quantité de fils d'application d'un processus d'application d'une application est supérieure ou égale à un premier seuil, la détermination (S301) d'une quantité de fils de liaison qui sont occupés par le processus d'application dans chaque interface d'un processus de serveur système, dans lequel les fils de liaison sont occupés par le processus d'application par l'invocation d'une interface dans le processus de serveur système, dans lequel un fil d'application dans le processus d'application correspond à un fil de liaison dans le processus de serveur système ; et
le maintien (S302) d'une quantité de fils de liaison occupés par le processus d'application dans au moins une interface dans le processus de serveur système non supérieure à un second seuil, dans lequel le second seuil est inférieur à une quantité de tous les fils de liaison inclus dans le processus de serveur système et supérieur au premier seuil.

2. Procédé selon la revendication 1, dans lequel le maintien de la quantité de fils de liaison non supérieure à un second seuil comprend :
lorsqu'une quantité de fils de liaison dans une première interface dans l'au moins une interface dans le processus de serveur système est supérieure ou égale au second seuil, le maintien d'un ou plusieurs fils d'application nouvellement ajoutés dans un état d'attente, dans lequel les fils d'application nouvellement ajoutés correspondent à la première interface parmi la ou les interfaces dans le processus de serveur système.

3. Procédé selon la revendication 2, dans lequel le procédé comprend en outre :
lorsque la quantité de fils de liaison dans la première interface parmi l'au moins une interface dans le processus de serveur système est inférieure au second seuil, l'attribution d'un fil de liaison correspondant à au moins un fil d'application parmi les fils d'application nouvellement ajoutés dans l'état d'attente.

4. Dispositif mobile, dans lequel une pluralité d'applications sont installées sur le dispositif mobile, et le dispositif mobile comprend :
une unité de détermination (1201), configurée pour, lorsqu'une quantité de fils d'application dans un processus d'application d'une application est supérieure ou égale à un premier seuil, déterminer (S301) une quantité de fils de liaison qui sont occupés par le processus d'application dans chaque interface dans un processus de serveur système, dans lequel les fils de liaison sont occupés par le processus d'application par l'invocation d'une interface dans le processus de serveur système, dans lequel un fil d'application dans le processus d'application correspond à un fil de liaison dans le processus de serveur système ; et
une unité de traitement (120), configurée pour maintenir (S302) une quantité de fils de liaison occupés par le processus d'application dans au moins une interface dans le processus de serveur système non supérieure à un second seuil, dans lequel le second seuil est inférieur à une quantité de tous les fils de liaison inclus dans le processus de serveur système et supérieur au premier seuil.

5. Dispositif mobile selon la revendication 4, dans lequel l'unité de traitement est spécifiquement configurée pour :
lorsqu'une quantité de fils de liaison dans une première interface dans l'au moins une interface dans le processus de serveur système est supérieure ou égale au second seuil, maintenir un ou plusieurs fils d'application nouvellement ajoutés dans un état d'attente, dans lequel les fils d'application nouvellement ajoutés correspondent à la première interface parmi la ou les interfaces dans le processus de serveur système.

6. Dispositif mobile selon la revendication 5, dans lequel l'unité de traitement est spécifiquement configurée pour :
lorsque la quantité de fils de liaison dans la première interface parmi l'au moins une interface dans le processus de serveur système est inférieure au second seuil, attribuer un fil de liaison correspondant à au moins un fil d'application parmi les fils d'application nouvellement ajoutés dans l'état d'attente.

7. Support de stockage lisible par ordinateur, ayant stockées en son sein des instructions visant à amener le dispositif mobile selon la revendication 4 à exécuter le procédé selon l'une quelconque des revendications 1 à 3.

8. Produit de programme informatique comprenant des instructions pour amener le dispositif mobile selon la revendication 4 à exécuter le procédé selon l'une quelconque des revendications 1 à 3.
